# EUROPÄISCHE PATENTSCHRIFT

(11) **EP 0 796 488 B1**
(45) Veröffentlichungstag und Bekanntmachung des Hinweises auf die Patenterteilung: **31.03.1999**
(21) Anmeldenummer: 95940141.5
(22) Anmeldetag: 05.12.1995
(51) Int. Cl.: G10K 11/36, G10K 11/162

(54) **OBERFLÄCHENWELLENBAUELEMENT UND VERFAHREN ZUR ERZEUGUNG EINER DÄMPFUNGSSTRUKTUR DAFÜR**
SURFACE WAVE COMPONENT AND METHOD OF PRODUCING AN ATTENUATING STRUCTURE THEREFOR
COMPOSANT A ONDES DE SURFACE ET PROCEDE PERMETTANT DE REALISER UNE STRUCTURE D'ATTENUATION APPROPRIEE

(30) Priorität: 09.12.1994 DE 4443946
(43) Veröffentlichungstag der Anmeldung: 24.09.1997
(73) Patentinhaber: SIEMENS AKTIENGESELLSCHAFT, 80333 München (DE)
(72) Erfinder: BAYER, Heiner, D-82140 Olching (DE); FISCHER, Walter, D-83026 Rosenheim (DE); PLUNDRICH, Winfried, D-82110 Germering (DE); STELZL, Hans, D-84491 Vaterstetten (DE); PAHL, Wolfgang, D-80336 München (DE)
(86) Internationale Anmeldenummer: DE9501738
(87) Internationale Veröffentlichungsnummer: WO9618182

(56) Entgegenhaltungen:
- EP-A- 0 098 599
- EP-A- 0 262 414
- EP-A- 0 605 361
- WO-A-83/02204
- US-A- 5 242 715

## Beschreibung

Oberflächenwellenbauelemente wie zum Beispiel Oberflächenwellenfilter sind elektronische Bauelemente, die der Signalverarbeitung von elektromagnetischen Wellen mit Informationsgehalt dienen. Bei den beispielsweise in Radaranlagen, Fernseh- und Videogeräten verwendeten Bauteilen wird der das Signal bzw. die Information tragende elektrische Impuls oder Strom in mechanische Schwingungen, sogenannte Oberflächenwellen umgewandelt. Durch einen geeigneten Aufbau des Wandlers, speziell durch eine besondere geometrische Ausgestaltung der schallerzeugenden Wandleroberflache werden die akustischen Eigenschaften dieses Wandlers beeinflußt. Dadurch ist es möglich, das akustische Signal in gewünschter Weise zu modifizieren. Beispielsweise wird auf diese Art und Weise die Zwischenfrequenz von ca. 38 MHz aus dem Gesamtspektrum eines Fernseh- oder Videosignals herausgefiltert. Oberflächenwellen, die nicht vollständig wieder in elektrische Signale zurückverwandelt werden, stören die Funktion eines Oberflächenwellenbauelements ebenso wie Reflexionen an Bauelementkanten oder anderen Strukturen. Zur Abdampfung solcher unerwünschter Oberflächenwellen und zur Reduzierung von Kantenreflexionen und Echoeffekten wird die Oberfläche des Wandlerelementes überwiegend im Bereich der Bauelementkanten mit einer Dämpfungsmasse versehen, welche die Energie der auslaufenden Wellen aufzehrt und Reflexionen und Echoeffekte reduziert.

Zur Erzeugung solcher Dämpfungsstrukturen sind organische Materialien mit ganz bestimmtem dynamisch-mechanischen Eigenschaftsprofil gefordert. In der EP 0 360 037 wird dazu beispielsweise vorgeschlagen, Zwei-Komponenten-Harze auf Epoxidbasis zu verwenden, welche basenkatalysiert mit Carbonsäuren und sauren Estern vernetzbar sind. Diese Zwei-Komponenten-Harze lassen sich in gewünschter Weise akustisch anpassen und führen zur geforderten Dämpfung, bereiten andererseits aber Probleme bei der Verarbeitung. Das Mischen der beiden Harzkomponenten führt in der Fertigung zu einem erhöhten Aufwand, wobei Harze mit begrenzter Gebrauchsdauer erhalten werden. Der Lösungsmittelgehalt der Reaktionsharze erfordert eine langwierige Abluft- und Härtungsprozedur, bei der außerdem die Gefahr besteht, daß die in einer besonderen dreidimensionalen Geometrie aufgedruckten Dämpfungsstrukturen verlaufen und dann die gewünschten Dämpfungseigenschaften nicht mehr aufweisen.

In der EP 0 098 599 A2 wird vorgeschlagen, für die Dämpfungsstrukturen von Oberflächenwellenbauelementen UV-härtende Acrylharzmischungen zu verwenden und diese auf einen hohen Elastizitätsmodul und eine hohe Dichte zu optimieren. Derart hergestellte und gehärtete Dämpfungsstrukturen zeigen in der Praxis jedoch eine zu hohe Sprödigkeit und eine zu geringe Haftung auf Chip- und Wandlermaterial. Die Strukturen werden auf einem Wafer fertiggestellt und anschließend durch Zersägen vereinzelt. Das dabei erforderliche Durchsägen von Dämpfungsstrukturen kann zu deren Abplatzen und Ablösen und damit zur Beschädigung des gesamten Bauelements führen.

Aufgabe der vorliegenden Erfindung ist es daher, ein Oberflächenwellenbauelement mit einer akustisch angepaßten Dämpfungsstruktur anzugeben, welches einfach und sicher herstellbar ist, welches eine geringe Kantenreflexion zeigt und welches eine hohe Dämpfung für Streusignale besitzt.

Diese Aufgabe wird erfindungsgemäß durch ein Oberflächenwellenbauelement mit den Merkmalen von Anspruch 1 gelöst. Weitere Ausgestaltungen der Erfindung sowie ein Verfahren zum Erzeugen einer akustischen Dämpfungsstruktur sind weiteren Ansprüchen zu entnehmen.

Bei der Erfindung wird ein herkömmlicher piezoelektrischer Wandler mit einer neuen akustischen Dämpfungsstruktur kombiniert, die in vorteilhafter Weise zu einem Oberflächenwellenbauelement mit verbesserten Eigenschaften führt. Der an sich bekannte piezoelektrische Wandler besteht im wesentlichen aus einem Substrat aus piezoelektrischem Material und Wandlerelektroden auf einer Oberfläche des Substrats. Die Wandlerelektroden können Sende- und Empfangselektroden umfassen, die durch eine Laufstrecke für die Oberflächenwellen voneinander getrennt sind. Auf dieser Oberfläche sind akustische Dämpfungsstrukturen so aufgebracht, daß Wandlerelektroden nur teilweise und Laufstrecken nicht davon bedeckt sind.

Da sowohl die Umrißlinie der von den Dämpfungsstrukturen bedeckten Fläche als auch die Dämpfungsstrukturen selbst im Querschnitt besonders ausgeformt sein müssen, ist zur Aufbringung der Dämpfungsstrukturen ein Druckverfahren wie zum Beispiel Siebdruck besonders geeignet. Die erfindungsgemäß aus einem UV-initiiert kationisch härtenden Epoxidharz bestehenden Dämpfungsstrukturen sind besonders gut zur Verarbeitung durch Siebdruck geeignet. Die erfindungsgemäßen Dämpfungsstrukturen lassen sich daher exakt in der gewünschten geometrischen Ausbildung erzeugen. Dementsprechend zeigt das Oberflächenwellenbauelement auch eine sehr gute akustische Dämpfung. Störsignale werden mit ca. 55 dB gegen das Hauptsignal abgedämpft. Das Reflexionsverhalten ist sehr gut, so daß praktisch keine Kantenreflexionen auftreten. Die sicher aufbringbaren Dämpfungsstrukturen zeigen eine gute Haftung auf dem Substrat, beispielsweise auf einer Piezokeramik. Diese bleibt auch während des gesamten Herstellungsprozesses erhalten, welcher ein Zersägen des Piezokeramikwafers zum Vereinzeln der Bauelemente enthält, wobei der Sägeschnitt durch größerflächig aufgebrachte Dämpfungsstrukturen des gehärteten Epoxidharzes geführt wird. Die durch die leichte Verarbeitbarkeit des Epoxidharzes einfach und sicher durchzuführende Herstellung des Oberflächenwellenbauelements macht dieses zudem kostengünstig.

Die Dämpfungsstrukturen bzw. das gehärtete Epoxidharz besitzt eine Glasübergangstemperatur von mehr als 120°C, so daß das Bauelement eine hohe Klimabeständigkeit aufweist, und somit ein Betrieb ohne unzulässige Veränderung der akustischen Eigenschaften möglich ist.

Die erfindungsgemäß für die Dämpfungsstrukturen verwendeten UV-initiiert kationisch härtenden Epoxidharze sind in elektronischer Qualität verfügbar. Das bedeutet, daß keine oder nur geringe Mengen korrosionsfördernder Stoffe im Harz enthalten sind, die während der Lebensdauer des Bauelements zur Korrosion von Wandlerstrukturen führen könnten.

Das Verfahren zum Erzeugen der akustischen Dämpfungsstrukturen umfaßt folgende Schritte:
Aufdrucken eines UV-initiiert kationisch härtenden Epoxidharzes in der gewünschten Struktur auf der Oberfläche des Oberflächenwellenbauelements,
gegebenenfalls Einhalten einer Haltezeit bis zu 60 Minuten und
Härten durch Einwirkenlassen von UV-Strahlung auf die Harzstruktur.

Für das Verfahren wird ein Epoxidharz verwendet, welches auf einem cycloaliphatischen Epoxid basiert. Zur Einstellung der gewünschten Verarbeitbarkeit durch insbesondere Siebdruck wird das cycloaliphatische Epoxid mit einem höher viskosen Reaktionsprodukt vermischt, welches durch Umsetzung eben dieses Epoxids mit einem Phenol, bevorzugt einem mehrwertigen Phenol, erhalten wird.

Neben diesem Produkt, welches wiederum ein Epoxid ist, sind im Epoxidharz außerdem noch zumindest ein Photoinitiator für den kationischen Härtungsprozeß und gegebenenfalls weitere, für Epoxidharze übliche Zusatzstoffe enthalten.

Cycloaliphatische Epoxide, zeichnen sich durch eine ausreichend hohe Glasübergangstemperatur aus und lassen sich in elektronischer Qualität durch Epoxidierung entsprechender Cycloalkene herstellen. Handelsübliche cycloaliphatische Epoxide umfassen auch Mischungen aus mehreren unterschiedlichen cycloaliphatischen Epoxiden. Geeignete Verbindungen gehorchen beispielsweise den folgenden Strukturformeln: 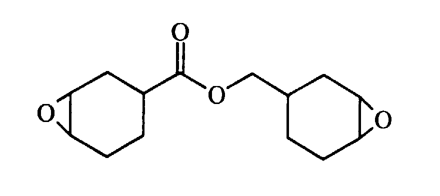 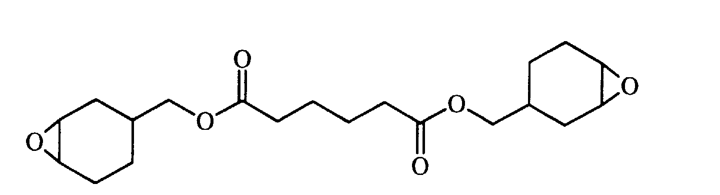 die auch unter den Handelsnamen Ardaldit ® CY 179 (Ciba) bzw. ERL 4221 und ERL 4299 (UCC) und CY 177 im Handel erhältlich sind.

Ein weiterer wesentlicher Bestandteil des Epoxidharzes ist das genannte Vorprodukt, das zum Beispiel durch Umsetzung eines cycloaliphatischen Epoxids mit Polyphenol, bevorzugt einem Bisphenol erhalten wird. Die Auswahl des Bisphenols ist beliebig, gut geeignet ist beispielsweise Bisphenol A.

Die zum Vorprodukt führende Umsetzung erfolgt basenkatalysiert unter relativ milden Bedingungen. Bevorzugtes Vorprodukt ist das 2:1 Addukt, wobei von den je zwei Epoxidgruppen der beiden cycloaliphatischen Diepoxide je eine mit dem Bisphenol reagiert hat. Dementsprechend ist das 2:1 Addukt ebenfalls ein Diepoxid. Durch 2 : 1 Umsetzung des bereits genannten CY 179 mit Bisphenol A wird beispielsweise im wesentlichen ein Vorprodukt mit folgender Formel erhalten:

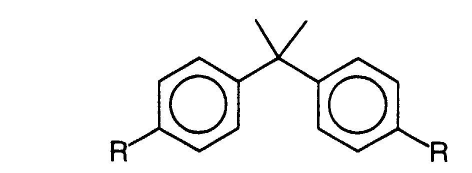

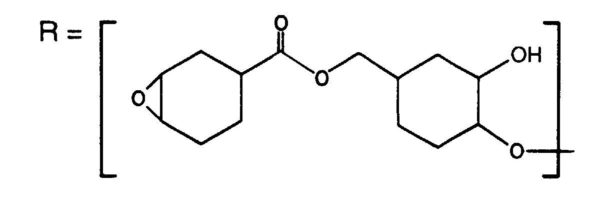

Möglich ist es jedoch auch, die zum Vorprodukt führende Umsetzung im Mol-Verhältnis von 1:1 bis 20:1 und vorzugsweise von 1:1 bis 5:1 durchzuführen. Insbesondere bei einem höheren Anteil an cycaloaliphatischem Epoxid verbleibt in der Reaktionsmischung nach der Umsetzung neben dem Vorprodukt (2:1 Addukt) ein zunehmender Anteil an unreagiertem und daher unverändertem cycloaliphatischen Epoxid. Wird dieses Mol-Verhältnis ausreichend hoch gewählt, kann das cycloaliphatisches Epoxid enthaltende Vorprodukt (Reaktionsmischung) ohne weiteres Zumischen von cycloaliphatischem Epoxid für die Anwendung eingesetzt werden.

Als weiterer unabdingbarer Epoxidharzbestandteil ist ein Photoinitiator für den kationischen Härtungsprozeß enthalten. Dessen Anteil am gesamten Epoxidharz kann 0,1 bis 5 Gewichtsprozent umfassen. Diese Photoinitiatoren setzen bei UV-Bestrahlung reaktive Kationen, zum Beispiel Protonen frei, die den kationischen Härtungsprozeß des Epoxidharzes initiieren. Die Photoinitiatoren sind dabei von stabilen organischen Oniumsalzen abgeleitet, insbesondere mit Stickstoff, Phosphor, Sauerstoff, Schwefel, Selen oder Jod als Zentralatom des Kations. Als besonders vorteilhaft haben sich aromatische Sulfonium- und Jodoniumsalze mit komplexen Anionen erwiesen. Auch ein eine Lewissäure freisetzender und beispielsweise als pi-Donor-Übergangsmetallkomplex realisierter Photoinitiator ist möglich. Weiterhin zu nennen sind Phenacylsulfoniumsalze, Hydroxyphenylsulfoniumsalze sowie Sulfoxoniumsalze. Einsetzbar sind weiterhin Oniumsalze, die nicht direkt, sondern über einen Sensibilisator zur Säurebildung angeregt werden. Auch organische Siliziumverbindungen, die bei UV-Bestrahlung in Anwesenheit von Aluminium-organischen Verbindungen ein Silanol freisetzen, können als Photoinitiatoren für den kationischen Härtungsprozeß eingesetzt werden.

Gut geeignet als Photoinitiator ist beispielsweise folgendes Sulfoniumsalz. Es ist ein Hauptbestandteil von Cyracure ® UVI 6974 (Union Carbide) :

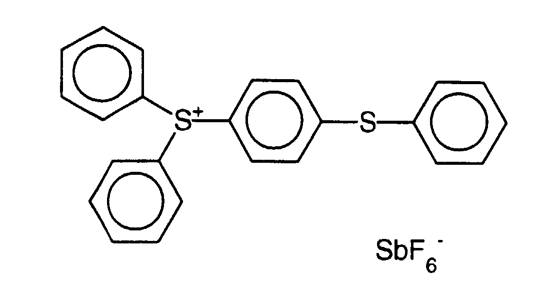

Zur Modifizierung können weitere Epoxide Bestandteile des erfindungsgemäßen Epoxidharzes bzw. des Epoxidharzes für das erfindungsgemäße Oberflächenwellenbauelement sein. In Frage kommen prinzipiell sämtliche Epoxide, die durch Persäureepoxidation gewonnen werden können. Dies sind beispielsweise langkettige α-Epoxide, epoxidiertes Polybutadien, epoxidiertes Sojabohnenöl und einige andere mehr.

Möglich ist es auch, weitere mit dem Epoxid copolymerisierbare Verbindungen zuzusetzen. Beispielsweise sind dies einige Vinylether und Alkohole, bevorzugt sind mehrfunktionelle Vinylether und Alkohole, vorzugsweise mehrfunktionelle Verbindungen. So können zum Beispiel Glykole, weitere aliphatische Diole, tri- oder tetrafunktionelle Alkohole wie Trimethylolpropan oder die Ether von Glykolen mit Phenolen oder Bisphenolen zugesetzt werden. Weitere geeignete copolymerisierbare Verbindungen sind Polymer-Polyole, die bei der Herstellung von Polyurethanen Verwendung finden.

Zusätzlich können nichtreaktive, für Epoxidharze jedoch bekannte Zusätze enthalten sein. Dies sind insbesondere Verlaufsmittel, Haftvermittler, Thixotropierungsmittel, thermische Härtungsinitiatoren und gegebenenfalls Farbstoffe oder Pigmente. Es wird ausdrücklich betont, daß dies wahlweise Bestandteile sind, die nicht notwendigerweise für die Erfindung erforderlich sind. Auch ohne diese Zusätze lassen sich Epoxidharze erhalten, die für das erfindungsgemäße Oberflächenwellenbauelement geeignet sind.

Bevorzugtes Thixotropierungsmittel ist pyrogene Kieselsäure, die in einem Anteil bis zu 15 Gewichtsprozent im Epoxidharz enthalten sein kann.

Im folgenden wird die Erfindung anhand von Ausführungsbeispielen und einer dazugehörigen Figur näher erläutert.

Die Figur zeigt ein erfindungsgemäßes Oberflächenwellenbauelement im schematischen Querschnitt.

Die Vorprodukte, die für die Herstellung der erfindungsgemäßen Siebdruckharze verwendet werden, sind epoxyfunktionell. Ausnahme ist Vorprodukt V3, das hydoxylfunktionell ist und säurekatalysiert synthetisiert wird.

### Herstellung eines ersten vorreagierten Produktes V1.

In einem 500 ml Rundkolben werden 300 g cycloaliphatisches Diepoxid (Araldit ® CY 177, Ciba) zusammen mit 15 g Bisphenol A vorgelegt und bei 90°C bis zur vollständigen Lösung gerührt. Nach Zugabe von 1,0 g basischem Katalysator wird auf 100°C aufgeheizt und weitere 21 Stunden bei dieser Temperatur belassen. Anschließend wird ca. 1 Stunde bei 130°C unter einem Vakuum von 0,6 mbar entgast. Die erhaltene Reaktionsmischung ist gebrauchsfertiges Vorprodukt V1.

### Herstellung eines zweiten Vorprodukts V2.

In einem 500 ml Rundkolben werden 150 g eines cycloaliphatischen Epoxids (Araldit ® CY 179), 150 g eines zweiten cycloaliphatischen Epoxids (Araldit ® CY 177) und 30 g Bisphenol A bei 90° gerührt, bis das Bisphenol vollständig gelöst ist. Nach Zugabe von 1,0 g Katalysator wird auf 100°C aufgeheizt und für 21 Stunden bei dieser Temperatur gehalten. Anschließend wird die Mischung bei 130°C unter einem reduzierten Druck von 0,6 mbar entgast. Die erhaltene Reaktionsmischung stellt gebrauchsfertiges Vorprodukt V2 dar.

### Herstellung eines dritten Vorprodukts V3.

Zur Herstellung des Vorprodukts V3 werden 23 g cycloaliphatisches Epoxid Araldit ® CY 179 und 40 g cycloaliphatischer Dialkohol (TCD-Alkohol DM, Hoechst, siehe Strukturformel) vorgelegt.

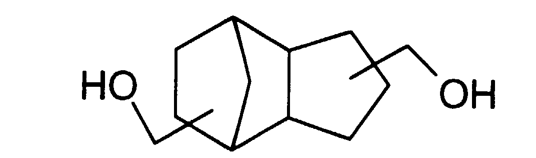

Unter Rühren wird langsam 0.05 g HSbF₆ (in 2 g TCD-Alkohol gelöst) zugetropft. Nach mehrstündiger Reaktionszeit wird auf 110°C erwärmt, eine weitere Stunde gerührt und 0.07 g eines Aminoethanols zugegeben. Es entsteht eine bei Raumtemperatur extrem hochviskose Masse, die als Vorprodukt V3 weiterverarbeitet wird.

### Herstellung eines weiteren Vorprodukts V4 und V5.

Ein weiteres Vorprodukt V4 wird in analoger Weise wie die Vorprodukte V1 und V2 aus 100 g cycloaliphatischem Epoxid Araldit ® CY 179 und 20 g Bisphenol A hergestellt, während ein weiteres Vorprodukt V5 nach der gleichen Vorschrift aus 100 g Araldit ® CY 179 und 15 g Bisphenol A erzeugt wird.

### Herstellung eines ersten siebdruckfähigen Epoxidharzes EH 1.

20 g Vorprodukt V1, 50 g Vorprodukt V2, 0,15 g Entschäumer (SH, Firma Wacker), 0,1 g Haftvermittler (A 186, Firma Union Carbide) und 0,5 g eines Photoinitiators für den kationischen Härtungsprozeß (Cyracure ® UVI 6974, Union Carbide) werden bei Raumtemperatur unter Rühren homogen vermischt. Nach 15 Minuten Rühren werden 4,1 g einer ersten pyrogenen Kieselsäure (Aerosil ® A 380 ( Fa. Degussa)) und 3,0 g einer weiteren pyrogenen Kieselsäure (Aerosil ® R202, Fa. Degussa) eingewogen und weitere 30 Minuten gerührt. Nach Entgasen bei einem Druck von < 1 mbar wird ein gebrauchsfertiges Epoxidharz EH1 erhalten, das bei Raumtemperatur eine Viskosität von 42 Pas zeigt.

### Herstellung eines zweiten siebdruckfähigen Epoxidharzes EH2.

Dazu werden 88 g cycloaliphatisches Epoxid Araldit ® CY 179, 150 g Vorprodukt V3 und 0,75 g Photoinitiator (Cyracure ™ UVI 6974) in entsprechender Weise homogen vermischt und entgast. Die gebrauchsfertige Epoxidharzmischung EH 2 hat eine Viskosität von 38 Pas.

### Herstellung eines dritten siebdruckfähigen Epoxidharzes EH3.

Es werden 30 g cycloaliphatisches Epoxid Araldit ® CY 179, 720 g Vorprodukt V4, 200 g epoxidiertes Sojabohnenöl (Edenol D 82, Fa. Henkel), 30 g Pyrogene Kieselsäure (Aerosil A 380 Fa. Degussa), 2,5 g Verlaufsmittel (Modaflow, Fa. Monsanto), 1,5 g eines Haftvermittlers (Silan A 186, Union Carbide) und 4,9 g des Photoinitiators UVI 6974 homogen vermischt und entgast. So wird ein siebdruckfähiges Epoxidharz mit einer Viskosität von 135 Pas erhalten.

### Herstellung eines siebdruckfähigen Epoxidharzes EH4.

Aus 650 g Vorprodukt V5, 25 g Dodecenoxid (Fa Peroxid Chemie), 90 g TCD-Alkohol DM (Fa. Hoechst), 17 g Ethylenglykol (Fa. Merck), 33 g pyrogene Kieselsäure Aerosil A 380 (Fa. Degussa), 2 g Verlaufshilfsmittel (Modaflow, Fa. Monsanto) und 5 g des Photoinitiators UVI 6974 wird in analoger Weise eine homogene Mischung hergestellt und entgast. Die gebrauchsfertige Formulierung hat eine Viskosität von 21 Pas.

Die so hergestellten Epoxidharze EH1 bis EH5 können nun mittels Siebdruck auf einem piezoelektrischen Wandler (Oberflächenwellenbauelement) aufgebracht werden. Die Viskosität ist ausreichend niedrig, so daß die Masse das zum Drukken verwendete Sieb passieren kann. Gleichzeitig ist sie viskos genug, um nicht von selbst durch das Sieb zu laufen. Die Epoxidharze besitzen eine ausreichende Thixotropie, so daß aufgedruckte Strukturen auch nach einer Standteit von 1 Stunde noch das gewünschte Querschnittsprofil aufweisen und nicht verlaufen. Standzeiten von bis zu 1 Stunde mussen eingehalten werden können, damit gegebenenfalls in die aufgedruckten Strukturen eingeschlossene Luftblasen entweichen können. Auf dem Substrat (Piezokeramik) zeigt die Masse eine gute Haftung. Sie ist nicht so klebrig, daß sie etwa beim Siebdruck Fäden zieht.

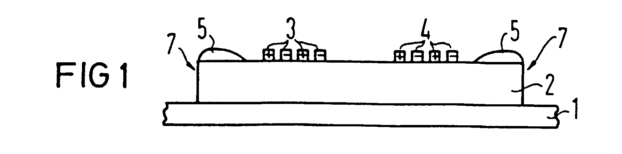

Figur 1 zeigt einen schematischen Querschnitt durch ein Oberflächenwellenbauelement (Oberflächenwellenfilter), auf dem bereits Dämpfungsstrukturen 5 wie beschrieben aufgedruckt wurden. Das Substrat 2 besteht aus einer Piezokeramik (zum Beispiel Lithiumniobat) von ca. 500 µm Dicke und ist auf seiner Unterseite ganzflächig mit einer Kupferwanne 1 verklebt.

Auf der Oberseite des Substrats 2 befinden sich die Wandlerelektroden 3 und 4. Die Figur zeigt einen Schnitt durch die "Zähne" der kammartig ausgebildeten Wandlerelektroden 3, 4, wobei jeweils zwei der kammähnlichen Wandlerelektroden mit unterschiedlicher Polarität (mit + und - gekennzeichnet) mit ihren "Zähnen" ineinandergeschoben sind. So bilden beispielsweise die Wandlerelektroden 3 einen Oberflächenwellensender, welcher das an die Wandlerelektroden 3 angelegte elektrische Signal in mechanische bzw. Schwingungssignale, die sogenannten Oberflächenwellen umwandelt. Die Wandlerelektroden 4 stellen den Oberflächenwellenempfänger dar. Dieser wandelt die über dem Bauelement gefilterten Oberflächenwellen wieder in elektrische Signale um. Die Dämpfungsstrukturen 5 sind außerhalb des aktiven Wandlerbereiches durch Siebdruck aufgebracht. Wie in der Figur ersichtlich, wird das Harz zum Beispiel an zwei einander gegenüberliegenden Kanten auf der Oberfläche des Substrats in Laufrichtung der Oberflächenwellen aufgebracht. Doch können auch sämtliche Kanten der Oberfläche des Substrats mit Epoxidharz bzw. mit Dämpfungsstrukturen belegt werden. Trotz der nicht maßstabsgetreuen Darstellung sind gut die flachen Böschungswinkel der Harzstrukturen zu erkennen, womit zusätzlich Reflexionen der Oberflächenwellen von der Siebdruckkante unterdrückt werden, da damit der Übergang der Welle vom Substrat 2 in die Dämpfungsstrukturen 5 erleichtert wird.

Nach der genannten Haltezeit werden die so beschichteten Bauelemente einer UV-Bestrahlung unterzogen. Bei einer Bestrahlungsstärke von ca. 50 mW cm⁻² im UV-A Bereich werden die Bauelement ca. 1 Minute bestrahlt.

Nun sind die Dämpfungsstrukturen ausreichend gehärtet, um gegebenenfalls einen Sägeprozeß zur Vereinzelung der Oberflächenwellenbauelemente aus dem Wafer vorzunehmen. Dabei kommt es weder zur Ablösung noch zur Beschädigung der Dämpfungsstrukturen. Zu einem beliebigen späteren Zeitpunkt, gegebenenfalls auch vor dem Sägen, werden die Bauelemente bzw. die Dämpfungsstrukturen für wenige Minuten zum Beispiel bei 130°C nachgehärtet.

Die fertigen Bauelemente werden einem Korrosionstest bei 110°C (Feuchte und Gleichspannung) unterzogen. Bei den getesteten Bauelementen werden keine korrosionsbedingten oder sonstigen Ausfälle beobachtet. Im Funktionstest wird außerdem die erfindungsgemäß erreichte Dämpfung(in dB) der Oberflächenwellenfilter bestimmt.

In der folgenden Tabelle sind einige Meßwerte der in den Ausführungsbeispielen hergestellten Epoxidharze und der damit beschichteten Oberflächenwellenfilter angegeben. Die Glasumwandlungstemperaturen Tg werden mit DSC bestimmt.

| Harz | Viskosität [Pas] | Tg [°C] | Dämpfung [dB] |
|---|---|---|---|
| EH 1 | 42 | 125 | 54 |
| EH 2 | 38 | 123 | 55 |
| EH 3 | 135 | 133 | 54 |
| EH 4 | 21 | 120 | 53 |

Es zeigt sich, daß das Dämpfungsverhalten der erfindungsgemäß mit UV-härtbaren Epoxidharzen beschichteten Oberflächenwellenbauelemente den Anforderungen genügt.

## Patentansprüche

1. Oberflächenwellenbauelement
― mit einem Substrat (2) aus piezoelektrischem Material,
― mit Wandlerelektroden (3, 4) auf einer Oberfläche des Substrats und
― mit zumindest auf einem Teil der Oberfläche aufgedruckten akustischen Dämpfungsstrukturen (5)
- mit einem durch die Dämpfungsstrukturen (5) geführten Sägeschnitt beim Vereinzeln der auf einem Wafer (2) hergestellten Oberflächenwellenbauelemente
- bei dem die Dampfungsstrukturen ein UV-initiiert kationisch härtendes Epoxidharz umfassen, hergestellt aus cycloaliphatischem Epoxid, mehrwertigem Penol und einem Photoinitiator für den kationischen Härtungsprozeß.

2. Oberflächenwellenbauelement nach Anspruch 1,
bei dem Störsignale mit mindestens 50 dB gegen das Hauptsignal abgedämpft sind.

3. Oberflächenwellenbauelement nach Anspruch 1 oder 2,
bei dem das Epoxidharz der Dämpfungsstrukturen (5) auf einem cycloaliphatischen Epoxid basiert und frei von Lösungsmitteln ist.

4. Verfahren zum Erzeugen einer akustischen Dämpfungsstruktur (5) auf einem Oberflächenwellenbauelement (7) durch
Aufdrucken eines UV-initiiert kationisch härtenden Epoxidharzes in der gewünschten Struktur (5) auf der Oberfläche des Oberflächenwellenbauelements,
gegebenenfalls Einhalten einer Haltezeit von bis zu 60 Minuten und
Härten durch Einwirkenlassen von UV-Strahlung auf die Harzstruktur (5),
bei dem ein Epoxidharz verwendet wird, das folgende Bestandteile umfaßt:
― Cycloaliphatisches Epoxid,
― Produkt aus der Umsetzung von cycloaliphatischem Epoxid und einem mehrwertigen Phenol im Molverhältnis der reaktiven Gruppen 1:1 bis 20:1,
― einem Photoinitiator für den kationischen Härtungsprozeß und gegebenenfalls .

5. Verfahren nach Anspruch 4,
bei dem ein Epoxidharz verwendet wird, das eine Viskosität von 20-150 Pas besitzt.

6. Verfahren nach Anspruch 4 oder 5,
bei dem das cycloaliphatische Epoxid ausgewählt ist aus 3,4-Epoxycyclohexylmethyl-3',4'-epoxycyclohexancarboxylat und Bis(3,4-eopxycyclohexylmethyl)adipat oder eine Mischung davon darstellt.

7. Verfahren nach einem der Ansprüche 4 bis 6,
bei dem das Epoxidharz weitere Bestandteile enthält, die bezüglich des UV-initiierten kationischen Härtungsprozesses reaktiv sind und ausgewählt sind aus aliphatischen Epoxiden und mono- oder mehrfunktionellen aliphatischen und araliphatischen Alkoholen und Vinylethern.

8. Verfahren nach einem der Ansprüche 4 bis 7,
bei dem die für Epoxidharze üblichen Zusatzstoffe ausgewählt sind aus Verlaufsmitteln, Haftvermittlern, Thixotropierungsmitteln und thermischen Härtungsinitiatoren.

9. Verfahren nach einem der Ansprüche 1 bis 8,
bei dem mehrere Bauelemente (7) auf einem Wafer erzeugt werden, und bei dem nach dem Härten der aufgedruckten Struktur (5) ein Sägeprozeß durch Teile der Struktur erfolgt, um die Bauelemente zu vereinzeln.

## Claims

1. Surface wave component
- having a substrate (2) composed of piezoelectric material,
- having transducer electrodes (3, 4) on one surface of the substrate and
- having acoustic attenuating structures (5) printed on at least a part of the surface,
- having a saw cut passed through the attenuating structures (5) during the separation of the surface wave components produced on a wafer (2),
- wherein the attenuating structures comprise an epoxy resin which cationically cures with UV initiation and is prepared from cycloaliphatic epoxide, polyhydric phenol and a photoinitiator for the cationic curing process.

2. Surface wave component according to Claim 1, wherein interference signals are attenuated by at least 50 dB with respect to the main signal.

3. Surface wave component according to Claim 1 or 2, wherein the epoxy resin of the attenuating structures (5) is based on a cycloaliphatic epoxide and is free of solvents.

4. Method for producing an acoustic attenuating structure (5) on a surface wave component (7) by printing an epoxy resin which cationically cures with UV initiation in the desired structure (5) on the surface of the surface wave component, optionally maintaining a holding time of up to 60 minutes and
curing by exposing the resin structure (5) to UV radiation,
wherein an epoxy resin is used which comprises the following constituents:
- cycloaliphatic epoxide,
- a product of the reaction of cycloaliphatic epoxide and a polyhydric phenol in a molar ratio of the reactive groups of 1:1 to 20:1,
- a photoinitiator for the cationic curing process.

5. Method according to Claim 4, wherein an epoxy resin is used which has a viscosity of 20 - 150 Pa·s.

6. Method according to Claim 4 or 5, wherein the cycloaliphatic epoxide is selected from 3,4-epoxycyclohexylmethyl 3',4'-epoxycyclohexanecarboxylate and bis (3,4-epoxycyclohexylmethyl)adipate or a mixture thereof.

7. Method according to any one of Claims 4 to 6, wherein the epoxy resin contains further constituents which are reactive with regard to the UV-initiated cationic curing process and are selected from aliphatic epoxides and mono- or multifunctional aliphatic and araliphatic alcohols and vinyl ethers.

8. Method according to any one of Claims 4 to 7, wherein the additives which are standard for epoxy resins are selected from flow control agents, bonding agents, thixotropic agents and thermal curing initiators.

9. Method according to any one of Claims 1 to 8, wherein a plurality of components (7) is produced on a wafer and wherein, after the curing of the printed-on structure (5), a sawing process is carried out through parts of the structure to separate the components.

## Revendications

1. Composant à ondes de surface
― avec un substrat (2) constitué d'un matériau piézoélectrique,
― avec des électrodes de convertisseur (3, 4) sur une surface du substrat et
― avec des structures d'atténuation acoustique (5) imprimées sur au moins une partie de la surface
- avec une ligne de découpage passée par les structures d'atténuation (5) lors de l'individualisation des composants à ondes de surface fabriqués sur une plaquette (2)
- dans lequel les structures d'atténuation comprennent une résine époxy à initiation par UV et à durcissement cationique, préparée à partir d'époxyde cycloaliphatique, de phénol polyvalent et d'un photoinitiateur pour le processus de durcissement cationique.

2. Composant à ondes de surface selon la revendication 1, dans lequel les signaux parasites sont atténués d'au moins 50 dB par rapport au signal principal.

3. Composant à ondes de surface selon la revendication 1 ou 2, dans lequel la résine époxy des structures d'atténuation (5) est à base d'un époxyde cycloaliphatique et est exempte de solvants.

4. Procédé pour la réalisation d'une structure d'atténuation acoustique (5) sur un composant à ondes de surface (7) par impression d'une résine époxy à initiation par UV et à durcissement cationique avec la structure souhaitée (5) sur la surface d'un composant à ondes de surface,
l'observation éventuelle d'un temps de repos de jusqu'à 60 minutes et
le durcissement par l'action d'une irradiation par des rayons UV sur la structure de résine (5)
dans lequel on utilise une résine époxy qui contient les constituants suivants :
― un époxyde cycloaliphatique,
― un produit provenant de la réaction d'un époxyde cycloaliphatique et d'un phénol polyvalent dans un rapport molaire des groupes réactionnels de 1 : 1 à 20 : 1,
― un photoinitiateur pour le processus de durcissement cationique.

5. Procédé selon la revendication 4, dans lequel on utilise une résine époxy qui présente une viscosité de 20 - 150 Pas.

6. Procédé selon la revendication 4 ou 5, dans lequel l'époxyde cycloaliphatique est choisi parmi le 3,4-époxycyclohexylméthyl-3',4'-époxycyclohexanecarboxylate et le bis(3,4-époxycyclohexylméthyl)adipate ou d'un mélange de ceux-ci.

7. Procédé selon l'une des revendications 4 à 6, dans lequel la résine époxy contient des constituants supplémentaires qui sont réactionnels en ce qui concerne le processus de durcissement cationique initié par UV et qui sont choisis parmi les époxydes aliphatiques et les alcools mono- ou polyfonctionnels aliphatiques et arylaliphatiques et les éthers vinyliques.

8. Procédé selon l'une des revendications 4 à 7, dans lequel les additifs courants pour les résines époxy sont choisis parmi les agents nivelants, les agents adhérents, les agents thixotropes et les initiateurs de durcissement thermique.

9. Procédé selon l'une des revendications 1 à 8, dans lequel plusieurs composants (7) sont réalisés sur une plaquette, et dans lequel après le durcissement de la structure imprimée (5) est effectué un processus de découpage par des parties de la structure pour individualiser les composants.
